# DEMANDE DE BREVET EUROPEEN

(11) **EP 1 840 097 A1**
(43) Date de publication de la demande: **03.10.2007**
(21) Numéro de dépôt: 06111736.2
(22) Date de dépôt: 27.03.2006
(51) Int. Cl.: C04B 2/02

(54) **Stabilisation de suspension de lait de chaux**

(71) Demandeur: Carmeuse S.A., 5300 Seilles (BE)
(72) Inventeur: Di Croce, Pascal, 4031, Angleur (BE); Tilquin, Jean-Yves, 4530, Villers-Le-Bouillet (BE)
(74) Mandataire: Van Straaten, Joop

(57) **Abrégé**

Des glucides sont utilisés comme additif pour stabiliser la viscosité des suspensions de lait de chaux calcique, de chaux magnésienne ou leurs mélanges.

Ces glucides sont choisis parmi les monosaccharides, disaccharides, oligosaccharides, polysaccharides ou leurs dérivés.

## Description

### Arrière-plan de l'invention

Cette invention relate une méthode pour rendre stable des laits de chaux naturellement instables.

Un lait de chaux est définit comme une suspension colloïdale d'hydroxyde alcalino-terreux à raison de 1 à 60 % en matière sèche dans un liquide. Cette suspension est obtenue soit par extinction de chaux calcique CaO (chaux vive) ou de chaux dolomitique (Ca, Mg)O avec un large excès de liquide, soit par mélange d'hydroxyde de calcium Ca(OH)₂ (chaux éteinte, hydrate de calcium) ou de chaux dolomitique hydratée dans un liquide, soit à partir d'une dilution de pâte d'hydroxyde de calcium ou de chaux. Le liquide est généralement de l'eau. Les matières premières contiennent naturellement des impuretés comme par exemple de la silice, de l'alumine, de l'oxyde de fer à raison de quelques pourcents.

Le lait de chaux est utilisé dans une large gamme d'applications en qualité de réactif chimique comme par exemple dans le traitement des eaux, dans le secteur de la construction, dans la dépollution des fumées acides.

La suspension est caractérisée par une concentration en matière sèche (ou solide) et par une distribution de la taille des particules en suspension (distribution granulométrique). La réactivité, la sédimentation et la viscosité sont des propriétés du lait de chaux directement influencées par sa concentration en matière sèche et par sa granulométrie.

La réactivité du lait de chaux (ou indice de solubilité) est définie comme étant la disponibilité chimique des particules en suspension, c'est-à-dire leur vitesse de solubilisation dont le marqueur est la conductivité de la phase liquide. D'une manière générale, la réactivité du lait de chaux est d'autant plus importante (mais basse en valeur) que la taille des particules est faible. Un lait de chaux dont la granulométrie des particules en suspension est faible, sera réactif.

Un lait de chaux est composé de particules individuelles d'hydroxyde de calcium qui ont tendance à sédimenter. Cette propension est d'autant plus marquée que la taille des particules en suspension est grande et que la concentration en matière solide est élevée. Un lait de chaux préparé au départ de chaux réactive sédimente peu. Outre ces paramètres, la porosité des grains de chaux et/ou d'hydrate ainsi que les charges électrostatiques des particules jouent un rôle dans la sédimentation.

La viscosité ou le comportement rhéologique des laits de chaux est une caractéristique intrinsèque influencée par leur concentration en matières sèches. Des laits de chaux de concentration inférieure à 20% en matière sèche se comportent comme des fluides newtoniens. La définition d'un fluide newtonien est assez restrictive : les contraintes de cisaillement sont proportionnelles au gradient de vitesse.

Toute déviation de ces règles est le signe d'un comportement non-newtonien, ce qui est observé expérimentalement pour des laits de chaux ayant des concentrations en matière sèche supérieures à 20%. Ces suspensions ont un comportement de fluide de type Bingham plastique non-idéal. Le comportement d'un tel corps se traduit par un état élastique lorsque la contrainte de cisaillement est inférieure à une valeur critique (appelée seuil de cisaillement ou contrainte seuil). Ce corps adopte un comportement plastique lors du dépassement de ce seuil de cisaillement. Ce comportement est généralement lié à l'existence d'une structure tridimensionnelle assez rigide, qui ne se rompt que si on exerce une force assez grande.
En termes pratiques, si la contrainte appliquée au fluide est inférieure à la contrainte seuil, aucune déformation ne se produit, le fluide ne coule pas. Il faut atteindre la contrainte minimale pour provoquer l'écoulement.

Par ailleurs, d'autres effets rhéologiques parfois irréversibles ont mis en évidence. Ils s'expliquent soit par l'arrachement d'éléments ultrafins collés aux particules plus grossières, soit par variation de l'homogénéité de la suspension. Des modifications rhéologiques des suspensions avec le temps, rarement réversibles, proviennent généralement de variation de la surface spécifique, du système cristallin de Ca(OH)₂, de la sédimentation des grosses particules, etc.

Le problème envisagé concerne la viscosité et sa stabilité. La viscosité du lait de chaux est une caractéristique fondamentale pour sa mise en oeuvre, son utilisation, sa manipulation : préparation, conditionnement, transport, écoulement, pompage,... Dans la littérature, on parle de suspension « pompable ». Leur niveau de viscosité doit être tel que leur agitation (maintien de la suspension sans décantation, ré-homogénéisation, remise en suspension) et leur déplacement (transport en conduite, pompage) soient possibles. Expérimentalement, cette pompabilité est rencontrée lorsque la viscosité dynamique des suspensions est inférieure à 1.500 cP (viscosité en centiPoise, mesurée à une vitesse de cisaillement de 5 s⁻¹). Certains paramètres dépendent du dimensionnement des installations (cuves, mobiles d'agitation, tuyauteries, pompes,...). De façon générale, la viscosité des laits de chaux augmente lorsque la concentration en matière sèche augmente, que la taille des particules en suspension diminue, que la surface spécifique des matières premières est élevée. Il est difficile de préparer des laits de chaux concentrés (par exemple teneur en matière sèche supérieure à 30%), de faible viscosité et dont la taille des particules en suspension est faible.

Par ailleurs, certains laits de chaux ne sont naturellement pas stables dans le temps. L'instabilité de la suspension se manifeste par une augmentation importante de leur viscosité, de leur seuil de cisaillement et de leur viscosité plastique. La phase de vieillissement des suspensions s'opère soit dans des conditions stationnaires (correspondant à une phase de repos), soit dans des conditions dynamiques (correspondant à une phase d'agitation ou sous cisaillement), soit dans des conditions mixtes (correspondant à des phases alternées repos-agitation). Les phases de vieillissement des suspensions reflètent des pratiques industrielles courantes (englobant des phases de production, de stockage, de transport, de pompage, de retransport, etc.). Les vieillissements dynamiques évitent une sédimentation néfaste à une utilisation optimale du produit. Ces comportements rhéologiques sont d'autant plus marqués que le temps, les contraintes de cisaillement et la concentration en matière sèche augmentent. Ils sont dépendants de la nature même de la matière première mais aussi de la finesse des laits de chaux : les grossiers sont stables, les fins le sont moins. Dans la littérature, certains ont relevé cette dépendance temporelle des propriétés rhéologiques des suspensions de Ca(OH)₂. D'autres ont mis en évidence une augmentation importante de la viscosité des suspensions de Ca(OH)₂ suivant que celles-ci soient vieillies dans des conditions de repos ou sous des contraintes de cisaillement.

Le changement de comportement rhéologique des laits de chaux génère de nombreux inconvénients :
- impossibilité de les agiter et de les transporter lors d'une augmentation de la viscosité dynamique, du seuil de cisaillement et de la viscosité plastique ;
- dommages aux équipements (tuyauterie, pompe, mobile d'agitation, moteur), usures prématurées des mobiles d'agitation ;
- équipements spécifiques requis (tuyauterie résistante, moteur puissant, pompe performante) ;
- coûts énergétiques importants (hauts taux de cisaillement, hautes puissances des moteurs et pompes).

Ces inconvénients réduisent donc leur utilisation, leur manutention, leur stockage, etc, ce qui causent des préjudices tant au producteur qu'au client utilisateur. Il est donc crucial de solutionner ce problème de stabilité.

Certains documents concernent l'aspect réduction de la viscosité et/ou l'aspect anti-décantation. Ils relatent un abaissement de la viscosité des suspensions de Ca(OH)₂ concentrées basée sur un choix des matières premières ou sur l'ajout d'additifs tels que des dispersants, des réducteurs de viscosité, des produits anti-décantation ou encore des agents de broyage.

Ainsi, on a suggéré l'utilisation de particules de matière première ayant, avant mise en suspension, une surface spécifique (méthode BET) inférieure ou égale à 10 m²/g, ce qui conduit à une suspension aqueuse calco-magnésienne peu visqueuse et concentrée. Les aspects viscosités ont été abordés, mais les aspects de vieillissement statiques, dynamiques ou mixtes n'ont pas été envisagés. Ce document ne cite ni ne suggère la stabilité des suspensions.

Des acides acryliques, méthacryliques et 2-acrylamido-2-méthylsulfonique sont parfois décrits comme agents dispersants pour des pigments incluant kaolin, dolomie, dioxyde de titane, argile et craie. Ce document ne cite ni ne suggère la stabilité des suspensions.

D'autres agents comme des polyélectrolytes cationiques et amphotères possédant des groupes contenant de l'azote (polyamines, polymère de chlorure de dimethyl diallyl ammonium), de l'hectorite ou encore d'autres dispersants (polyméthacrylates, polyphosphates) maintiennent les suspensions de Ca(OH)₂ à des viscosités qui les rendent pompables. Un autre type d'agent dispersant consiste en des polyélectrolytes de faible poids moléculaire moyen, comme par exemple les polymères d'acide acrylique et méthacrylique, les lignosulfonates. Ces agents améliorent la fluidité des suspensions concentrées de Ca(OH)₂ mais provoquent une élévation brutale et incontrôlable de la viscosité. Ces documents ne citent ni ne suggèrent la stabilité des suspensions.

Des laits de chaux concentrés et fluides sont obtenus par ajout de produits soufrés (principalement du gypse) qui limitent l'augmentation de la température et favorisent la croissance des grains lors de l'extinction de la chaux. Ces agents conduisent à former des particules plus agglomérées. Les laits de chaux formés sont peu réactifs et auront une propension forte à la décantation. Ce document ne cite ni ne suggère la stabilité des suspensions.

Une suspension colloïdale stable de chaux dans une solution d'hydroxyde de potassium (contenant préférentiellement du chlorure de potassium) a parfois été décrite, mais cette référence ne cite ni ne suggère une stabilité des suspensions.

On a décrit l'addition de silicate de sodium, de bentonite ou de polyacrylate comme stabilisant des suspensions de Ca(OH)₂ vis-à-vis de la sédimentation. Ce document ne cite ni ne suggère la stabilité des suspensions dans un cadre plus large.

D'autres familles de dispersants ont été décrits, comme des dérivés de polysaccharides solubles dans l'eau (tels que la cellulose partiellement hydrolysée contenant des groupes carboxyle et en option des groupes hydroxyalkyle et/ou sulfate, de l'amidon partiellement hydrolysé contenant une grande proportion en amylose et des groupes sulfoalkyle avec 1 à 4 atomes de carbone). Ces additifs ont une faible viscosité et un pouvoir plastifiant sur les suspensions minérales incluant ciment, chaux ou plâtre. Ce document ne cite ni ne suggère la stabilité des suspensions.

On a démontré que le fructose et quelques mono- et disaccharides réduisaient la viscosité des suspensions aqueuses d'alumine (Al₂O₃), mais ceci ne suggère pas que ces additifs améliorent la stabilité des suspensions, en particulier celle des laits de chaux.

D'autres ont décrit la fabrication d'une suspension fluide contenant de l'oxyde de calcium, de l'oxyde d'aluminium et de la silice par ajout de sucrose, raffinose, lignine, methyl glucopyranoside, lactose, fructose, sodium polyphosphate, ou tréhalose. Ce document ne cite ni ne suggère la stabilité des suspensions.

Aucune des solutions proposées ne convient pour maintenir la stabilité des suspensions de laits de chaux au cours du temps, en particulier à forte teneur en matière sèche et pour toutes les conditions rencontrées dans les milieux industriels.
Certains documents sont liés au problème de stabilité résolu par l'ajout de polyacrylates. Ils abordent les problèmes de stabilité des laits de chaux en introduisant dans leur composition les polyacrylates comme additifs agissant la plupart du temps en tant que dispersants. Ces polyacrylates permettent d'obtenir des laits de chaux de concentrations en matière sèche élevées et de faible viscosité.

Le document EP 0313483 divulgue ainsi divers polyacrylates (polymère et/ou copolymère éthylènique hydrosoluble) qui ajoutés à raison de 500 à 20.000 ppm comme agents de broyage, permettent la préparation des suspensions aqueuses de chaux microparticulaires, hautement concentrées en matière sèche, de viscosités faibles et stables, et dont les particules ont la dimension souhaitée et une réactivité très améliorée. Il est à noter que l'utilisation de cet additif ne se fait que durant le broyage et que cet additif a en outre comme but d'augmenter la réactivité de la chaux.

Certains polyacrylates modifiés (500 à 100.000 ppm) augmentent la consistance des suspensions et stabilisent dans le temps les suspensions au niveau de la séparation de phase par sédimentation. Ils rendent les solutions "versables" même après un temps de vieillissement au repos, car ils les rendent moins susceptibles de former des gels non-fluides ou des sédiments denses en régime stationnaire.

Certains ont décrit l'utilisation de polymères acides du type acide polyacryliques/polyacrylates ou acides polycarboxyliques/polycarboxylates et de co-additifs de type sels de métaux alcalins ou d'acides carboxyliques et carboxylates possédant 2 à 10 atomes de carbone, qui permettent de préparer des suspensions de Ca(OH)₂ qui ont des viscosités faibles et qui restent fluides après plusieurs jours.

On a décrit l'ajout de polyacrylates alcalins ou alcalino-terreux (100 à 50.000 ppm) qui a pour but de réaliser une dispersion stable de chaux hydratée dans le temps. Cet ajout augmente la quantité de matière sèche des suspensions de Ca(OH)₂ et maintient une limite d'écoulement inférieure à 25,1 Pa pour un temps de prélèvement de 120 min. Le seuil de cisaillement augmente dans des conditions de repos.

Il a été fait mention de suspensions d'hydroxyde de calcium contenant des agents de floculation de type anionique et/ou un sel d'acide polycarboxylique. Ces suspensions ont une bonne viscosité et sont stables à la sédimentation.

D'autres documents répondent à la même problématique en utilisant dans la composition des laits de chaux de concentration d'au moins 40% en matière solide, des agents incluant des polyélectrolytes cationiques et amphotères possédant des groupes contenant de l'azote, comme par exemple des polyamines et des polymères de type chlorure de diallyl ammonium. Cette composition peut être complétée par des polyacrylates, polyméthacrylates et polyphosphates. Ces agents maintiennent les suspensions à une viscosité « pompable » mais agissent comme floculants une fois dissous dans les suspensions.

D'une façon générale, les polyacrylates sont des agents chimiques onéreux. Ils sont en outre incompatibles avec certaines applications, notamment dans le domaine alimentaire. Leur caractère biodégradable est en outre insuffisant.

### Domaine de l'invention

Le but de la présente invention est de rendre stable des laits de chaux naturellement instables. Par stable, on entend essentiellement le maintien au cours du temps des caractéristiques rhéologiques (comme la viscosité dynamique, le seuil de cisaillement ou la viscosité plastique) à des niveaux compatibles avec leur utilisation, leur mise en oeuvre, leur manipulation optimale au cours du temps dans des conditions stationnaires, dynamiques ou mixtes. Au terme de ces vieillissements, ces caractéristiques doivent donc être peu altérées. Selon la présente invention, ce but est atteint au moyen d'un lait de chaux dans lequel on ajoute un ou plusieurs additifs sélectionnés parmi les glucides ou certains de leurs dérivés, comme ceux obtenus par oxydation de ces glucides ou par hydrogénation de ces glucides. D'une façon générale, nous ferons référence à la viscosité des laits de chaux.

### Description de l'invention

Les laits de chaux décrits dans la présente invention consistent en des suspensions dont la teneur en matière sèche est comprise entre 1 et 60 %, de préférence entre 10 et 50 %, avantageusement entre 30 et 45 %. Ces laits de chaux sont préparés par différentes méthodes :
1. par extinction de chaux calciques et/ou de chaux dolomitiques (on parlera d'hydratation) ;
2. à partir de chaux hydratée et/ou de chaux dolomitique hydratée en poudre (mise en suspension) ;
3. par dilution de pâte d'hydrates de calcium et/ou magnésium ou de pâte de chaux calciques et/ou dolomitiques (mise en suspension).

Ces matières premières contiennent naturellement des impuretés (silice, alumine,...). Le liquide utilisé pour la suspension est généralement essentiellement de l'eau. D'autres solvants non-aqueux peuvent être envisagés, ainsi que des mélanges de solvants non-aqueux ou encore des mélanges d'eau et de solvant(s) non-aqueux.

Les particules de matières solides en suspension d'hydroxydes alcalino-terreux répondent à la formule générale xCa(OH)₂.(1-x) MgO.yH₂O dans laquelle x et y sont des fractions molaires et dans laquelle x est compris entre 0 et 1 ; x aura de préférence une valeur entre 0,8 et 1, avantageusement une valeur de 1.

Il est préférable d'avoir un lait de chaux caractérisé par une fine distribution granulométrique, assurant une plus longue suspension des particules et une meilleure réactivité chimique. La suspension présente une distribution de la taille des particules en suspension X99 inférieure à 355 µm, de préférence égale ou inférieure à 250 µm, avantageusement inférieure à 150 µm et une distribution X50 inférieure à 50 µm, de préférence égale ou inférieure à 30 µm, avantageusement inférieure à 10 µm. La distribution de la taille des particules est mesurée par diffraction laser. Les distributions caractérisées par les termes X99 et X50, sont valeurs interpolées de la courbe de distribution de la taille des particules. Les distributions X99 et X50 correspondent aux dimensions pour lesquelles respectivement 99 et 50% des particules sont inférieures aux dites dimensions. Afin d'ajuster leur granulométrie, ces laits de chaux sont susceptibles d'être soumis à un broyage (par exemple de type à perles), tamisage (par exemple sur toile) ou tout autre moyen de réduction de leur granulométrie.

Pour toutes les compositions décrites dans cette invention, la viscosité des laits de chaux est inférieure à 2.000 cP (comme mesurée sur un viscosimètre Haake Rotovisco RT20 à une vitesse de cisaillement de 5 s⁻¹), de préférence inférieure à 1.500 cP, avantageusement inférieure à 1.200 cP.

Ces additifs sont sélectionnés avantageusement parmi les glucides ou leurs dérivés comme ceux obtenus par oxydation de ces glucides ou par hydrogénation de ces glucides, à l'exclusion des dérivés de glucides estérifiés par un acide.

Comme additifs décrits dans la présente invention sont considérés les glucides parmi lesquels on distingue les monosaccharides, les disaccharides, les oligosaccharides et les polysaccharides.

Parmi les monosaccharides, on cite à titre d'exemple: érythrose, thréose, xylose, ribose, allose, glucose, galactose, fructose, mannose.

Parmi les disaccharides, sont cités à titre d'exemple : saccharose (ou sucrose), lactose, maltose, tréhalose.

Parmi les polysaccharides, on cite à titre d'exemple : l'amidon, l'amidon modifié, l'amidon hydrolysé, le glycogène, l'inuline, l'inuline modifiée, la cellulose, la cellulose modifiée, les pectines, les dextrines et cyclodextrines.

A noter que certains glucides comme l'inuline peuvent se classer parmi les oligosaccharides ou les polysaccharides, suivant le degré de polymérisation effectif.

D'autres molécules peuvent être envisagées comme la chitine, le glucan, les glycosaminoglucans, l'agar, la pectine, la gomme xanthane, la gomme de guar, gomme de caroube, le glucomannane.

Parmi les glucides modifiés, sont considérés les polyols qui sont des formes hydrogénées. A titre d'exemple, on cite sorbitol (ou glucitol), érythritol, xylitol, lactitol, maltitol.

D'autres glucides modifiés sont les aminosaccharides comme la glucosamine ou encore des formes oxydées comme les acides uroniques (notamment acide galacturonique, acide glucuronique), l'acide gluconique, sans oublier de mentionner les sels de ces acides.

Comme additifs décrits dans la présente invention sont considérés les acides carboxyliques. On cite à titre d'exemple : acide lactique, acide glycérique, acide acrylique, acide citrique, acide gluconique, acide fumarique, acide malique, acide maléique, acide phtalique, acide pyruvique, acide salicylique, acide succinique, acide tartrique, acide acétique, etc.

Comme additifs décrits dans la présente invention sont également considérées des amines. Sont citées à titre d'exemple la monoéthanolamine, la diéthanolamine, triéthanolamine, etc.

Comme additifs décrits dans la présente invention sont aussi considérés des alcools polyhydriques ou polyols comme les glycols et le glycérol. Pour les glycols, on cite à titre d'exemple : éthylène glycol, diéthylène glycol, triéthylène glycol, polyéthylène glycol, etc.

Comme additifs décrits dans la présente invention sont considérés des polyacides et leurs sels. On cite à titre d'exemple la carboxyméthylcellulose de sodium et des sulfonates oligomériques. Des exemples de sulfonates sont des condensats de sulfonate ou formaldéhyde de naphtalène et des résines de type mélamine ou formaldéhyde sulfonée qui peuvent être mis en oeuvre en présence de surfactants par exemple de type non-ioniques.

Comme additifs décrits dans la présente invention sont considérés des acides polyaminocarboxyliques et leurs sels. Sont cités à titre d'exemple, l'acide éthylènediaminotétraacétique (EDTA) et les sels sodiques.

Comme source de ces additifs, on prend en considération les sirops et/ou les mélasses dérivés de sucre de canne, de betterave et de chicorée. Ces additifs peuvent aussi être sélectionnés parmi des matériaux de recyclage ou des sous-produits de production comme des lignosulfonates dérivés de l'industrie papetière.

Ces additifs peuvent être conditionnés sous forme de solide comme une poudre, de pâte, de solution aqueuse ou non-aqueuse. Ils peuvent être cristallins, semi-cristallins ou amorphes.

Ces additifs, utilisés individuellement ou en mélange, entrent dans la composition des laits de chaux en vue de la présente invention à raison de 0,01 à 10 % en poids. Ce pourcentage est exprimé en poids de matière sèche active de l'additif par rapport à la teneur totale en matière sèche de la matière première nécessaire pour fabriquer le lait de chaux initial. On choisira de préférence des valeurs entre 0,01 et 5 %, avantageusement entre 0,1 et 1 %.
Cette teneur dépendra notamment de la nature des matières premières, de la concentration en matière sèche, des conditions de vieillissement, etc. Un ajustement de la concentration en additif a pour but de répondre au critère de stabilité de la rhéologie des laits de chaux. Il convient en effet de satisfaire aux exigences du fabricant, du client et aux conditions d'utilisation. Cette concentration est à minimiser notamment pour des raisons économiques.

Le choix d'un ou de plusieurs additifs utilisés en mélange, peut aussi être conditionné par l'application. Certaines applications rencontrent des exigences strictes en matière de compatibilité alimentaire, de respect de normes environnementales, de compatibilité de procédé, etc. D'autres critères comme des critères économiques, de disponibilité, de conditionnement, de facilité de mise en oeuvre, peuvent guider ce choix.

Ces additifs peuvent être utilisés seuls ou en formulation. La formulation consiste en mélange d'au moins deux additifs sélectionnés au sein d'une même famille ou de plusieurs familles. La formulation sera conditionnée sous forme de solide, de pâte ou de solution aqueuse ou non aqueuse.

De façon générale, les additifs relatifs à l'invention entrent dans la composition du lait de chaux de plusieurs manières. Le recours à ces additifs ne porte en rien préjudice à la préparation des laits de chaux et il a l'avantage d'être modulable. Ils peuvent en effet être introduits en une étape ou en plusieurs étapes, au cours des différentes phases du conditionnement des matières premières ou durant la préparation des laits de chaux de la présente invention.

A titre d'exemple, ces étapes sont l'hydratation ou l'extinction de la chaux, le broyage de la chaux et/ou de l'hydrate, la préparation du lait de chaux, le stockage, le transport, etc. De façon détaillée, le procédé de préparation de lait de chaux stable en ce qui concerne l'évolution des caractéristiques rhéologiques au cours du temps, peut s'envisager dans des conditions stationnaires, dynamiques ou mixtes (par alternance d'une ou plusieurs phases stationnaires et dynamiques). Ce procédé peut ainsi se faire par :
a. l'incorporation par mélange d'un additif solide ou d'une solution aqueuse ou non, dans un lait de chaux préparé au préalable avec une teneur en hydrate de chaux ou de chaux dolomitique, de 1 à 60 % en masse par rapport à la masse globale du lait de chaux ;
b. l'incorporation par mélange d'un additif solide ou d'une solution aqueuse ou non, dans le liquide de préparation du lait de chaux et ensuite incorporation par mélange de la chaux éteinte en une quantité telle que le lait de chaux obtenu présente une teneur en hydrate de chaux ou de chaux dolomitique de 1 à 60 % en masse par rapport à la masse globale du lait de chaux ;
c. l'incorporation par mélange d'un additif solide ou d'une solution aqueuse ou non, dans le liquide de préparation du lait de chaux servant à éteindre la chaux vive (CaO ou chaux dolomitique) et éteindre la chaux avec ce liquide en une quantité telle que le lait de chaux obtenu présente une teneur en hydrate de chaux ou de chaux dolomitique de 1 à 60 % en masse par rapport à la masse globale du lait de chaux ;
d. le mélange de chaux éteinte sèche anhydre (ou de chaux-dolomitique) avec un additif solide et mise en suspension du mélange dans l'eau en une quantité telle que le lait de chaux obtenu présente une teneur en hydrate de chaux ou de chaux dolomitique de 1 à 60 % en masse par rapport à la masse globale du lait de chaux ;
e. le mélange d'un additif solide avec de la chaux vive (CaO ou chaux dolomitique) et extinction de la chaux vive avec de l'eau en une quantité telle que le lait de chaux obtenu présente une teneur en hydrate de chaux ou de chaux dolomitique de 1 à 60 % en masse par rapport à la masse globale du lait de chaux ;
f. l'imprégnation de chaux éteinte sèche anhydre (ou de chaux-dolomitique) avec une solution aqueuse ou non, d'un additif solide en une quantité telle que le lait de chaux obtenu présente une teneur en hydrate de chaux ou de chaux dolomitique de 1 à 60 % en masse par rapport à la masse globale du lait de chaux ;
g. l'imprégnation de chaux vive (CaO ou de chaux dolomitique) avec une solution aqueuse ou non, d'un additif solide en une quantité telle que le lait de chaux obtenu présente une teneur en hydrate de chaux ou de chaux dolomitique de 1 à 60 % en masse par rapport à la masse globale du lait de chaux.

Il est à noter que les masses de chaux mentionnées ci-dessus ne tiennent jamais compte de la masse en additifs ajoutés. De plus, par additif, on entend un produit utilisé seul ou en mélange.

La présente invention concerne donc l'utilisation des glucides cités ci-dessus comme additif de stabilisation de la viscosité de suspensions de lait de chaux calcique et/ou magnésienne.

Cette invention concerne également un procédé de préparation de suspensions de lait de chaux calcique et/ou magnésienne présentant une viscosité stable en raison d'une étape où l'on ajoute des glucides cités ci-dessus. Comme indiqué ci-dessus, cette addition visant à stabiliser la viscosité, peut avoir lieu de différentes façons au cours dudit procédé.

### Exemple 1

Cet exemple décrit la stabilisation de laits de chaux concentrés (30% en poids de matière sèche) naturellement instables dans des conditions de vieillissement, par l'ajout d'additifs.

Le protocole de préparation est le suivant. L'additif est introduit à raison de 0,1 et 0,5 % en poids sec/sec (c'est-à-dire quantité de matière active sèche d'additif par rapport à la quantité de matière sèche nécessaire pour la préparation du lait de chaux) dans 1.050 g d'eau déminéralisée et thermostatisée à 20°C servant à la préparation de la suspension. Les additifs sont sélectionnés parmi un glucide, un glucide modifié par oxydation, un glucide modifié par hydrogénation et un dérivé sulfoné. Le mélange est homogénéisé sous agitation mécanique pendant 2 min. Ensuite, 450 g de chaux hydratée sont ajoutés et le mélange est maintenu sous agitation mécanique pendant 5 min. Les laits de chaux ainsi préparés sont passés sur un tamis de 355 µm. Ces laits de chaux sont mesurés au départ, puis vieillis pendant 12 h sous agitation faible (soit 200 rpm ou rotation par minute) et remesurés. Ils sont caractérisés en terme de viscosité au moyen d'un viscosimètre « Haake Rotovisco RT20 » à une vitesse de cisaillement de 5 et 100 s⁻¹ (voir tableau I).

**TABLEAU I**

| | **Au départ** | | **Agitation 200 rpm** | | | **Au départ** | | **Agitation 200 rpm** | |
|---|---|---|---|---|---|---|---|---|---|
| **Viscosité mesurée à** | 5 s⁻¹ | 100 s⁻¹ | 5 s⁻¹ | 100 s⁻¹ | | 5 s⁻¹ | 100 s⁻¹ | 5 s⁻¹ | 100 s⁻¹ |
| **Sans additif** | 975 | 91 | 7320 | 1260 | | 975 | 91 | 7320 | 1260 |
| **Saccharose** | 433 | 30 | 660 | 60 | | 78 | 5 | 222 | 20 |
| **Acide -D-gluconique** | 269 | 19 | 317 | 25 | | 74 | 5 | 101 | 9 |
| **Sorbitol** | 419 | 33 | 546 | 49 | | 314 | 24 | 408 | 42 |
| **Lignosulfonate** | 967 | 92 | 1176 | 124 | | 921 | 88 | 1101 | 121 |
| | **Dosage 0,1% en additif** | | | | | **Dosage 0,5% en additif** | | | |

De façon prévisible, les caractéristiques rhéologiques comme les viscosités dynamiques à vitesse de cisaillement 5 et 100 s⁻¹ des laits de chaux non traités par des additifs évoluent fortement au cours du temps, démontrant ainsi leur instabilité.

De façon surprenante, l'utilisation d'additifs permet de conserver, quelles que soient les conditions de vieillissement statique ou dynamique, les propriétés rhéologiques dans de faibles gammes de viscosité. Il est clair que ces additifs maintiennent la stabilité des laits de chaux.

### Exemple 2

Cet exemple décrit la stabilisation de laits de chaux concentrés (30% en poids de matière sèche) naturellement instables dans des conditions de vieillissement, par l'ajout d'additifs.

Le protocole de préparation est identique à celui décrit dans l'exemple 1. Les laits de chaux sont mesurés au départ, puis soumis à une phase de vieillissement de 12 h durant laquelle ils subissent une agitation forte (soit 600 rpm) et enfin remesurés.

**TABLEAU II**

| | **Au départ** | | **Agitation 600 rpm** | | | **Au départ** | | **Agitation 600 rpm** | |
|---|---|---|---|---|---|---|---|---|---|
| **Viscosité mesurée à** | 5 s⁻¹ | 100 s⁻¹ | 5 s⁻¹ | 100 s⁻¹ | | 5 s⁻¹ | 100 s⁻¹ | 5 s⁻¹ | 100 s⁻¹ |
| **Sans additif** | 975 | 91 | 7320 | 1260 | | 975 | 91 | 7320 | 1260 |
| **Saccharose Acide -D-gluconique Sorbitol Lignosulfonate** | 433 | 30 | 881 | 76 | | 78 | 5 | 195 | 15 |
| | 269 | 19 | 425 | 32 | | 74 | 5 | 99 | 7 |
| | 419 | 33 | 706 | 55 | | 314 | 24 | 387 | 30 |
| | 967 | 92 | 3523 | 422 | | 921 | 88 | 818 | 72 |
| | **Dosage 0,1% en additif** | | | | | **Dosage 0,5% en additif** | | | |

Les résultats sont présentés dans le tableau II. De façon prévisible, la tendance naturellement à l'instabilité des laits de chaux non traités et vieillis, est confirmée.
De façon surprenante, le recours à un additif choisi parmi les glucides ou glucides modifiés, a maintenu constante les propriétés rhéologiques du lait de chaux.

### Exemple 3

Le protocole de préparation est identique à celui décrit dans l'exemple 1. Cet exemple (voir tableau III) montre l'influence favorable du saccharose sur la stabilisation de la viscosité de laits de chaux présentant des teneurs en matière sèche de 30, 35 et 40%. La mesure de la viscosité est effectuée dans ce cas à une vitesse de cisaillement de 5 s⁻¹.

**TABLEAU III**

| **Concentration en matière sèche** | **Concentration en saccharose sec/sec** | **Viscosité du lait de chaux frais** | **Viscosité du lait de chaux vieilli 12 heures sous forte agitation** |
|---|---|---|---|
| % | % | cP | cP |
| 30 | 0 | 912 | 5993 |
| 30 | 0,25 | 141 | 339 |
| 35 | 0 | 2405 | 12027 |
| 35 | 0,25 | 817 | 820 |
| 40 | 0 | 4101 | 9181 |
| 40 | 0,25 | 1304 | 1959 |

### Exemple 4

Le protocole de préparation est identique à celui décrit dans l'exemple 1. Cet exemple (voir tableau IV) compare l'influence du saccharose et du fructose sur la stabilisation de la viscosité de laits de chaux présentant une teneur en matière sèche de 30%. Les concentrations en saccharose vont de 0 à 0,5%, tandis que celles en fructose vont de 0 à 2%. Cette différence n'est pas significative en soi : elle montre que pour un type de lait de chaux déterminé (composition, taille des particules, teneur en matière sèche, conditions de vieillissement, etc), certains glucides (ou leurs dérivés) sont plus appropriés que d'autres. La mesure de la viscosité est effectuée dans ce cas à une vitesse de cisaillement de 5 s⁻¹.

**Tableau IV**

| **Concentration en matière sèche** | **Concentration en saccharose sec/sec** | **Viscosité du lait de chaux frais** | **Viscosité du lait de chaux vieilli 12 heures sous forte agitation** |
|---|---|---|---|
| % | % | cP | cP |
| 30 | 0 | 912 | 5993 |
| 30 | 0,10 | 379 | 906 |
| 30 | 0,25 | 141 | 339 |
| 30 | 0,5 | 72 | 195 |

| **Concentration en matière sèche** | **Concentration en fructose sec/sec** | **Viscosité du lait de chaux frais** | **Viscosité du lait de chaux vieilli 12 heures sous forte agitation** |
|---|---|---|---|
| % | % | cP | cP |
| 30 | 0 | 1069 | 4515 |
| 30 | 0,40 | 821 | 470 |
| 30 | 1 | 732 | 291 |
| 30 | 2 | 459 | 163 |

## Revendications

1. Utilisation de glucides comme additif de stabilisation de la viscosité de suspensions de lait de chaux calcique et/ou magnésienne, **caractérisée en ce que** les glucides sont choisis parmi les monosaccharides, les disaccharides, les oligosaccharides, les polysaccharides ou les dérivés de glucides obtenus par oxydation ou par hydrogénation.

2. Utilisation de glucides selon la revendication 1, **caractérisée en ce que** la teneur en glucides est de 0,01 à 10% en poids par rapport à la matière sèche initiale du lait de chaux.

3. Utilisation de glucides suivant l'une quelconque des revendications précédentes, **caractérisée en ce que** la teneur en matière sèche du lait de chaux est comprise entre 1 et 60% en poids.

4. Utilisation de glucides suivant une quelconque des revendications précédentes, **caractérisée en ce que** les monosaccharides sont choisis parmi érythrose, thréose, xylose, ribose, allose, glucose, galactose, fructose, mannose.

5. Utilisation de glucides suivant l'une des revendications 1 à 3, **caractérisée en ce que** les disaccharides sont choisis parmi saccharose, lactose, maltose, tréhalose.

6. Utilisation de glucides suivant l'une des revendications 1 à 3, **caractérisée en ce que** les oligosaccharides ou les polysaccharides sont choisis parmi amidon, amidon modifié, glycogène, inuline, cellulose, cellulose modifiée, pectine, dextrine, cyclodextrine.

7. Utilisation de glucides suivant l'une des revendications 1 à 3, **caractérisée en ce que** les dérivés de glucides modifiés par oxydation sont choisis parmi acide galacturonique et ses sels, acide glucuronique et ses sels, acide gluconique et ses sels.

8. Utilisation de glucides suivant l'une des revendications 1 à 3, **caractérisée en ce que** les dérivés de glucides modifiés par hydrogénation sont choisis parmi sorbitol, érythritol, xylitol, lactitol, maltitol.

9. Utilisation de glucides suivant une quelconque des revendications précédentes, **caractérisée en ce que** le lait de chaux est obtenu par hydratation de chaux vive.

10. Utilisation de glucides suivant l'une des revendications 1 à 8, **caractérisée en ce que** le lait de chaux est obtenu par mise en suspension de chaux éteinte.

11. Utilisation de glucides suivant l'une des revendications précédentes, **caractérisée en ce que** les suspensions sont essentiellement à base d'eau.

12. Utilisation de glucides suivant l'une des revendications 1 à 10, **caractérisée en ce que** les suspensions sont à base d'eau et d'un solvant non-aqueux.

13. Procédé de préparation de suspensions de lait de chaux calcique et/ou magnésienne présentant une viscosité stable, **caractérisé en ce qu'**il comporte une étape d'addition de glucides choisis parmi les monosaccharides, les disaccharides, les oligosaccharides, les polysaccharides ou les dérivés de glucides obtenus par oxydation ou par hydrogénation.

14. Procédé de préparation suivant la revendication 13, **caractérisé en ce que** le lait de chaux est obtenu par hydratation de chaux vive.

15. Procédé de préparation suivant la revendication 13, **caractérisé en ce que** le lait de chaux est obtenu par mise en suspension de chaux éteinte.

16. Procédé de préparation suivant l'une des revendications 13 à 15, **caractérisé en ce que** la teneur en matière sèche du lait de chaux obtenu est comprise entre 1 et 60% en poids.
